(19) Europäisches Patentamt
European Patent Office
Office européen des brevets

(11) **EP 2 875 077 B1**

(12) **EUROPÄISCHE PATENTSCHRIFT**

(45) Veröffentlichungstag und Bekanntmachung des Hinweises auf die Patenterteilung:
**25.03.2020 Patentblatt 2020/13**

(21) Anmeldenummer: **13753808.8**

(22) Anmeldetag: **20.06.2013**

(51) Int Cl.:
*C09C 1/36* (2006.01)  *C09C 3/06* (2006.01)
*B82Y 30/00* (2011.01)  *C09D 7/62* (2018.01)
*D21H 21/28* (2006.01)  *D21H 27/28* (2006.01)

(86) Internationale Anmeldenummer:
**PCT/EP2013/001827**

(87) Internationale Veröffentlichungsnummer:
**WO 2014/000873 (03.01.2014 Gazette 2014/01)**

(54) **VERFAHREN ZUR OBERFLÄCHENBEHANDLUNG VON ANORGANISCHEN PARTIKELN**

METHOD FOR THE SURFACE TREATMENT OF INORGANIC PARTICLES

PROCÉDÉ DE TRAITEMENT DE LA SURFACE DE PARTICULES INORGANIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2012 DE 102012012931**
**05.06.2013 DE 102013009390**

(43) Veröffentlichungstag der Anmeldung:
**27.05.2015 Patentblatt 2015/22**

(73) Patentinhaber: KRONOS INTERNATIONAL, INC.
**51373 Leverkusen (DE)**

(72) Erfinder:
• **JUERGENS, Volker**
**57399 Kirchhundem (DE)**
• **BREYDER, Alexander**
**51379 Leverkusen (DE)**
• **MERSCH, Frank**
**42799 Leichlingen (DE)**
• **BLUEMEL, Siegfried**
**40883 Ratingen-Eggerscheid (DE)**
• **SCHMITT, Volker**
**42799 Leichlingen (DE)**

(56) Entgegenhaltungen:
**EP-A1- 0 499 863      EP-A1- 2 111 846**
**EP-A2- 0 579 062      EP-A2- 1 329 483**
**WO-A1-99/35193        WO-A1-2013/023018**
**DE-A1-102006 012 564**

**Beschreibung**

Gebiet der Erfindung

Die Erfindung betrifft ein Verfahren zur Oberflächenbehandlung von Titandioxidpigmentpartikeln, die Pigmentpartikel erhältlich nach einem solchen Verfahren und die Verwendung der Pigmentpartikel in Laminaten, Beschichtungen und Kunststoffen.

Technologischer Hintergrund der Erfindung

Anorganische Partikel, insbesondere anorganische Pigmentpartikel werden vielfach oberflächenbehandelt, um bestimmte Eigenschaften zu verändern, beispielsweise Oberflächenladung, Dispergiereigenschaften, Säure oder Lichtbeständigkeit. Bei der Verwendung von Pigmenten, insbesondere von Titandioxid kommt es unter anderem auf ein hohes Deckvermögen (Opazität) an, welches durch eine besondere Art der Oberflächenbehandlung verbessert werden kann. Hohes Deckvermögen bzw. hohe Opazität ist beispielsweise bei Einsatz der Titandioxidpigmentpartikel in Dispersionsfarben oder in Laminaten (Dekorpapier) gefordert.
Erhöhtes Deckvermögen wird üblicherweise durch eine Oberflächenbeschichtung mit Siliciumoxid und/oder Aluminiumoxid erzielt, die eine möglichst lockere, poröse, voluminöse Struktur aufweist und als Abstandshalter für die einzelnen Pigmentpartikeln wirkt. Alternativ können die Pigmentpartikel mit geeigneten Füllstoffen (z.B. Calciumcarbonat, Kaolin, Talkum) vermischt werden, wobei die Füllstoffpartikel als sogenannte "Extender-Partikel" ebenfalls als Abstandshalter für die Pigmentpartikel dienen sollen.
US 3,591,398 und US 4,075,031 offenbaren Verfahren zur Auffällung von porösen $SiO_2$- und $Al_2O_3$-Beschich-tungen auf $TiO_2$-Partikel, um das Deckvermögen der Pigmentpartikel zu verbessern. Dabei werden alkalische Vorläuferverbindungen der Beschichtungsoxide in eine saure wässrige Suspension der $TiO_2$-Partikel, die einen pH-Wert von $\leq 7$ aufweist, gegeben und die entsprechenden Oxide in lockerer Struktur schnell ausgefällt.
Dekorpapier ist ein Bestandteil eines dekorativen, duroplastischen Beschichtungswerkstoffes, der vorzugsweise zur Veredelung von Möbeloberflächen und für Laminat-Fußböden eingesetzt wird. Als Laminate werden Schichtpress-Stoffe bezeichnet, in denen beispielsweise mehrere imprägnierte, aufeinander geschichtete Papiere bzw. Papiere und Hartfaser- oder Holzspanplatten miteinander verpresst sind. Durch die Verwendung von speziellen Kunstharzen wird eine außerordentlich hohe Kratz-, Stoß-, Chemikalien- und Hitzebeständigkeit der Laminate erreicht.
Die Verwendung von Spezialpapieren (Dekorpapieren) ermöglicht die Herstellung dekorativer Oberflächen, wobei das Dekorpapier nicht nur als Deckpapier für z.B. unattraktive Holzwerkstoffoberflächen, sondern auch als Träger für das Kunstharz dient.
Zu den Anforderungen, die an ein Dekorpapier gestellt werden, gehören u.a. Opazität (Deckvermögen), Lichtechtheit (Vergrauungsstabilität), Farbechtheit, Nassfestigkeit, Imprägnierbarkeit und Bedruckbarkeit. Die Wirtschaftlichkeit des Herstellverfahrens von Dekorpapieren wird u.a. von der Opazität des Pigments im Papier bestimmt.
Um die erforderliche Opazität des Dekorpapiers zu erzielen, ist ein Pigment auf Basis von Titandioxid prinzipiell hervorragend geeignet. Bei der Papierherstellung wird in der Regel ein Titandioxidpigment bzw. eine Titandioxid-Pigment-Suspension mit einer Zellstoffsuspension vermengt. Neben den Einsatzstoffen Pigment und Zellstoff kommen im Allgemeinen auch Hilfsstoffe wie z. B. Nassfestmittel und gegebenenfalls weitere Zusatzstoffe wie z. B. bestimmte Füllstoffe zum Einsatz.
Zur Verbesserung der Lichtechtheit (Vergrauungsstabilität) von Dekorpapier wird das Titandioxidpigment üblicherweise mit Aluminiumverbindungen, insbesondere mit Aluminiumphosphat beschichtet. Zur Verbesserung der Opazität der Titandioxidpigmente bei der Anwendung in Dekorpapier und anderen Anwendungen sind ebenfalls spezielle Oberflächenbehandlungen bekannt, beispielsweise die Auffällung von voluminösen Metalloxidschichten bei Pigmenten für Dispersionsfarben, wobei die Auffällung als Abstandshalter (Spacer) für die einzelnen Pigmentpartikel wirkt.
Gemäß DE 103 32 650 A1 kann ein Titandioxidpigment hoher Vergrauungsstabilität und gleichzeitig verbesserter Retention und Opazität hergestellt werden. Das Verfahren zeichnet sich dadurch aus, dass eine Aluminium- und eine Phosphorkomponente bei einem konstant gehaltenen pH-Wert von wenigstens 10 in eine Titandioxidsuspension gegeben werden und anschließend der pH-Wert auf unter 9 abgesenkt wird, um Aluminiumphosphatverbindungen auszufällen.
DE 10 2011 015 856 A1 beschreibt ein weiteres Verfahren zur Herstellung eines Aluminiumphosphat-beschichteten Titandioxidpigments mit hoher Vergrauungsstabilität und guter Helligkeit und Opazität. Bei diesem Verfahren wird zunächst Phosphorsäure und anschließend eine alkalische und eine saure Aluminiumverbindung in die Titandioxidsuspension gegeben.
WO 2002/077107 A2 offenbart eine Titandioxidpigmentzusammensetzung, die sowohl eine hohe Vergrauungsstabilität als auch eine hohe Opazität aufweist. Die Pigmentzusammensetzung besteht aus einer Mischung von zwei verschiedenen Titandioxidpigment-Typen. Typ A ist ein für den Einsatz in Dekorpapier geeignetes Titandioxidpigment hoher Vergrauungsstabilität, beispielsweise mit Aluminiumphosphat beschichtet, und Typ B ist ein für den Einsatz in Dispersionsfarben geeignetes Titandioxidpigment, welches durch Beschichtung mit einem erhöhten Gehalt an $SiO_2$ und $Al_2O_3$ in flockiger voluminöser Auffällung gekennzeichnet ist. Diese Zusammensetzung hat den Nachteil, dass zunächst zwei verschiedene Pigmenttypen hergestellt und anschließend homogen vermischt werden müssen.

EP 2 111 846 A1 richtet sich auf ein kosmetisches Erzeugnis, da ein multi-funktionales Kompositpulver enthält. Das Pulver weist einen plättchenförmigen Grundkörper auf, der unter anderem aus Glimmer, $S_1O_2$ und Glaspulver gewählt ist, der als Träger für Titandioxidpartikel dient und ferner einen dünnen Film eines Komposits von Titandioxid- und Eisenoxid. Das Pulver unterdrückt in vorteilhafter Weise das Auftreten der Weißmaskierung nach Applizierung des kosmetischen Films und weist darüber hinaus gute UV-Eigenschaften auf.

EP 1 329 483 A2 beschreibt ebenfalls ein kosmetisches Produkt. Hierbei sind Titandioxidpartikel getrennt voneinander in Form einer Monolage auf der Oberfläche eines plättchenförmigen Substrats aufgebracht. Das kosmetischen Erzeugnis ist angenehm auf der Haut zu tragen und weist ferner keinen Blaustich auf.

WO 2013/023018 offenbart eine Pigmentmischung für Dekorpapier. Die Mischung enthält kolloidale Spacerpartikel, die auf der Oberfläche von Pigmentpartikeln wie Titandioxidpartikel verteilt sind. Diese sind wiederum auf der Oberfläche eines Trägerpartikels aufgebracht. Die Mischung besitzt verbesserte optische und Retentionseigenschaften.

Es besteht ein Bedürfnis nach einem Verfahren zur Herstellung von anorganischen Pigmenten, die gegenüber bekannten anorganischen Pigmenten Vorteile aufweisen, z.B. durch höhere Effizienz und dadurch erreichbare Kosteneinsparungen in der Anwendung. Es besteht insbesondere ein Bedürfnis nach einem alternativen wirtschaftlichen Verfahren zur Herstellung eines Titandioxidpigments mit verbesserter Opazität und der Möglichkeit, gleichzeitig auch andere Eigenschaften wie Witterungsstabilität, Vergrauungsstabilität, Helligkeit, Korrosionsbeständigkeit etc. zu optimieren.

## Aufgabenstellung und Kurzbeschreibung der Erfindung

Aufgabe der Erfindung ist es, ein alternatives Verfahren zur Oberflächenbehandlung von Titandioxidpigmentpartikeln bereitzustellen, mit Hilfe dessen die Opazität und/oder andere Eigenschaften wie z.B. Witterungsstabilität oder Helligkeit der Pigmentpartikel verbessert werden können.

Die Aufgabe wird gelöst durch ein Verfahren zur Oberflächenbehandlung von Titandioxidpigmentpartikeln, das durch folgende Schritte gekennzeichnet ist :

a) Bereitstellen einer wässrigen Suspension von Titandioxidpigmentpartikeln,
b) Fällung von anorganischen Verbindungen aus wässriger Lösung durch Mischen von mindestens zwei Komponenten in wässriger Lösung und geeignete Steuerung von pH-Wert und/oder Temperatur in einem separaten Behälter und Erzeugung einer Suspension eines Fällungsprodukts, wobei das Fällungsprodukt aus Agglomeraten feinteiliger Primärpartikel und/oder aus Einzelkristallen der Oxide und Hydroxiden von Silicium, Aluminium, Zirkon oder Titan oder Mischungen davon besteht,
c) Zugabe des besagten Fällungsprodukts zu der wässrigen Suspension von Titandioxidpigmentpartikeln.

Weitere vorteilhafte Verfahrensvarianten sind in den Unteransprüchen beschrieben.

## Figuren

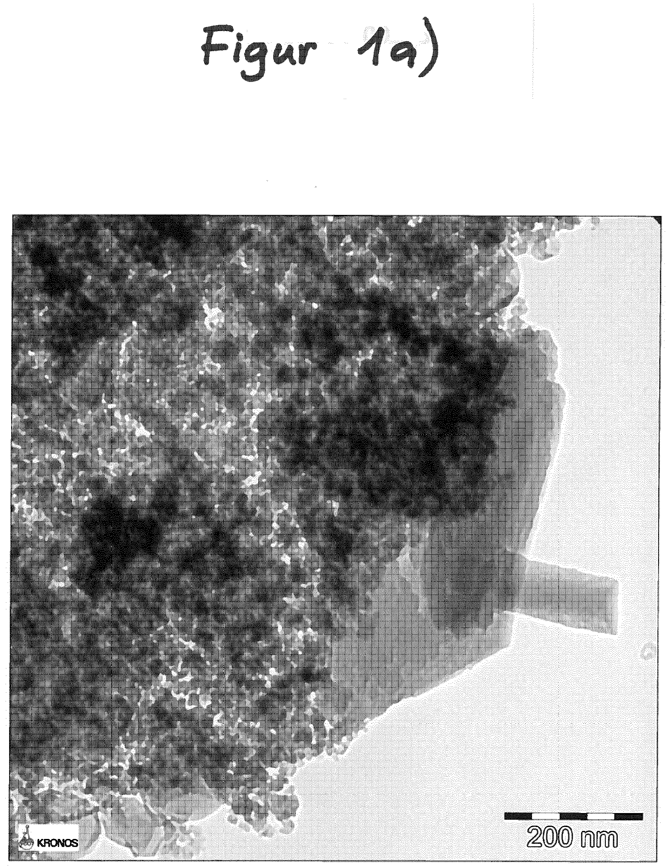

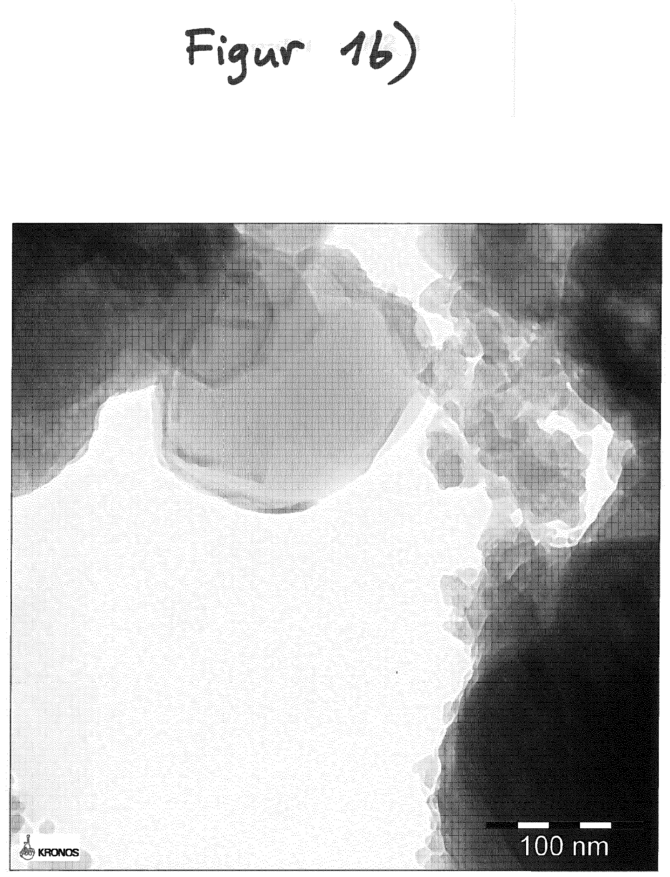

Die Figuren Figur 1a und 1b zeigen Transmissionselektronenmikroskop-Aufnahmen (TEM) des erfindungsgemäßen Fällungsprodukts, hergestellt gemäß Beispiel 1.
Die Figuren 2a und 2b zeigen TEM-Aufnahmen von erfindungsgemäß oberflächenbehandelten $TiO_2$-Pigmentpartikeln, hergestellt gemäß Beispiel 1.
Figur 3 zeigt eine TEM-Aufnahme von konventionell oberflächenbehandelten $TiO_2$-Pigmentpartikeln, hergestellt gemäß Vergleichsbeispiel 1.

## Beschreibung der Erfindung

Hier und im Folgenden sollen unter "Oxid" auch die entsprechenden wasserhaltigen Oxide, Hydroxide bzw. Oxidhydrate verstanden werden. Alle im Folgenden offenbarten Angaben bezüglich pH-Wert, Temperatur, Konzentration in Gew.-% oder Vol.-%, Partikelgröße usw. sind so zu verstehen, dass alle Werte, die im Bereich der dem Fachmann bekannten jeweiligen Messgenauigkeit liegen, mit umfasst sind. Die Angabe "signifikante Menge" oder "signifikanter Anteil" im Rahmen des vorliegenden Patents kennzeichnet die Mindestmenge einer Komponente, ab der die Eigenschaften der Mischung im Rahmen der Messgenauigkeit beeinflusst werden.

Die erfindungsgemäß verwendeten Titandioxidpigmentpartikelweisen bevorzugt einen mittleren Partikeldurchmesser von maximal etwa 1 μm, insbesondere von etwa 0,1 bis 1 μm und insbesondere bevorzugt von etwa 0,2 bis 0,5 μm auf.

Die Erfindung geht von einer wässrigen Suspension Titandioxidpigmentpartikelaus. Die Partikel können zuvor einer Mahlung unterzogen worden sein, beispielsweise in einer Rührwerksmühle. Die Partikel können weiterhin bereits mit einer Oberflächenbeschichtung, beispielsweise mit anorganischen Metalloxiden, versehen worden sein. Die Titandioxidpigmentpartikel kann Material, das nach dem Chloridverfahren oder nach dem Sulfatverfahren hergestellt wurde, eingesetzt werden. Die Titandioxidpartikel sind bevorzugt Aluminium-dotiert. Die Höhe der Aluminiumdotierung liegt vorzugsweise bei 0,2 bis 2,0 Gew.-% gerechnet als $Al_2O_3$. Die Titandioxidpartikel können entweder unbehandelt (Titandioxid-Grundkörper) oder bereits oberflächenbeschichtet eingesetzt werden. Die Oberflächenbeschichtung kann aus einer oder mehreren Lagen bestehen. Üblicherweise enthält die Beschichtung eine oder mehrere der Verbindungen $SiO_2$, $Al_2O_3$, $ZrO_2$, $TiO_2$, $SnO_2$, $P_2O_5$. Dem Fachmann sind die üblichen Zusammensetzungen und die üblichen Verfahrensweisen zur Herstellung der Beschichtung bekannt. Insbesondere können die Beschichtungslagen eine dichte und/oder eine lockere Struktur aufweisen.

Erfindungsgemäß wird der wässrigen Suspension Titandioxidpigmentpartikelein Fällungsprodukt aus anorganischen Verbindungen zugesetzt, welches aus Agglomeraten feinteiliger Primärpartikel und/oder aus Einzelkristallen besteht. Das Fällungsprodukt enthält Oxide und Hydroxide von Silicium, Aluminium, Zirkon oder Titan oder Mischungen davon. Die feinteiligen Primärpartikel weisen in einer Dimension bevorzugt eine Größe von bis zu 200 nm, insbesondere bis zu 100 nm und besonders bevorzugt bis zu 50 nm auf. In einer weiteren Ausführung der Erfindung sind die Primärpartikel überwiegend kristallin. Die Einzelkristalle im Fällungsprodukt weisen bevorzugt eine Kantenlänge bis zu 3 μm, insbesondere bis 1 μm auf. Die Herstellung des Fällungsprodukts erfolgt durch Mischen von mindestens zwei Komponenten in wässriger Lösung und geeignete Steuerung von pH-Wert und/oder Temperatur, wobei die gewünschten anorganischen Verbindungen ausfallen. Dem Fachmann sind entsprechende Komponenten und die geeigneten Steuerungsparameter zur Fällung bekannt. Die Fällung findet in einem separaten Behälter statt, wobei es sich beispielsweise auch um eine Rohrleitung zu dem Gefäß handeln kann, in dem sich die Suspension der anorganischen Pigmentpartikel befindet. Die Rohrleitung kann zudem gegebenenfalls mit einem Inline-Mischer ausgerüstet sein.

Zur Fällung von Agglomeraten von Aluminiumoxid-Primärpartikeln wird in einer Ausführung der Erfindung beispielsweise eine wässrige Mischlösung aus mindestens zwei Komponenten mit einem pH-Wert von 4,5 bis 7 bereitgestellt. Die mindestens zwei Komponenten umfassen entweder eine alkalische Aluminiumverbindung (z.B. Natriumaluminat) und eine saure Komponente, beispielsweise eine Säure oder ein sauer reagierendes Salz (z.B. Aluminiumsulfat). Oder sie umfassen alternativ eine saure Aluminiumverbindung (z.B. Aluminiumsulfat) und eine alkalische Komponente, beispielsweise eine Lauge oder ein alkalisch reagierendes Salz (z.B. Natriumaluminat). In der Mischlösung fällt Aluminiumoxid in locker strukturierten Agglomeraten aus.

Zur Fällung von Agglomeraten von Siliciumoxid-Primärpartikeln werden als Komponenten beispielsweise eine alkalische Alkalisilikatlösung (z.B. Wasserglas) und eine Säure (z.B. $H_2SO_4$ oder HCl) eingesetzt. $SiO_2$ fällt bekanntermaßen bei pH-Werten unter etwa 9 bis 10 aus.

In einer besonderen Ausführung der Erfindung kann gefälltes Alumosilikat hergestellt werden. Hierbei werden entweder eine alkalische Silikatlösung mit einer alkalischen Aluminiumverbindung (z.B.Natriumaluminat) gemischt und anschließend oder gleichzeitig mit einer Säure oder einer sauer reagierenden Komponente (z.B. Aluminiumsulfat) auf einen pH-Wert von etwa ≤10 eingestellt.Alternativ kann die Alkalisilikatlösung mit einer sauer reagierenden Aluminiumverbindung (z.B. Aluminiumsulfat)versetzt werden und mit einer entsprechenden Menge Säure bzw. Lauge auf einen pH-Wert von etwa ≤10 eingestellt werden.

Das erfindungsgemäß in einem separaten Behälter hergestellte Fällungsprodukt wird anschließend der Pigmentpartikelsuspension unter Rühren zugegeben, bevorzugt in Suspensionsform. Die Bedingungen werden so gewählt, dass nach der Zugabe das Fällungsprodukt und die Pigmentpartikel in der Suspension chemisch stabil sind.

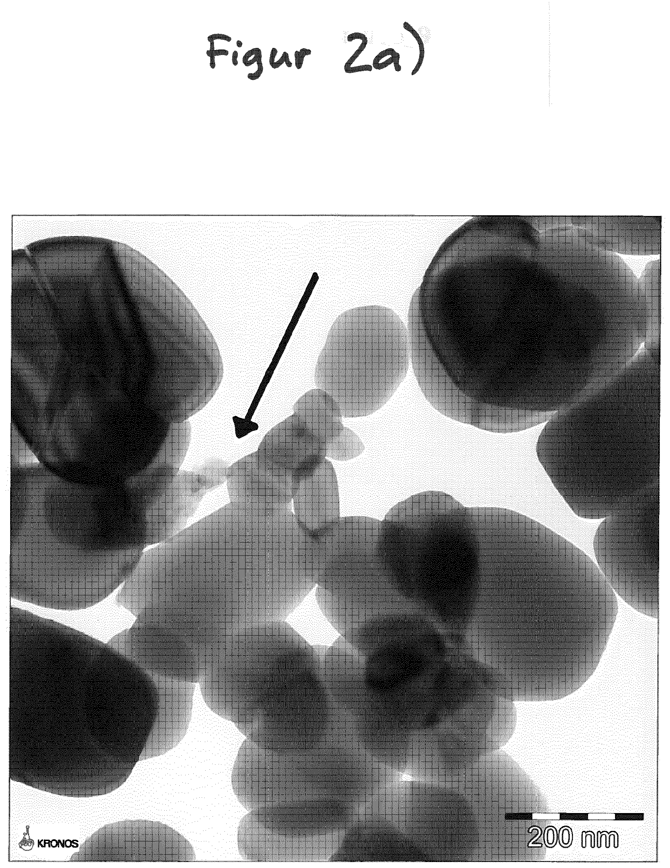

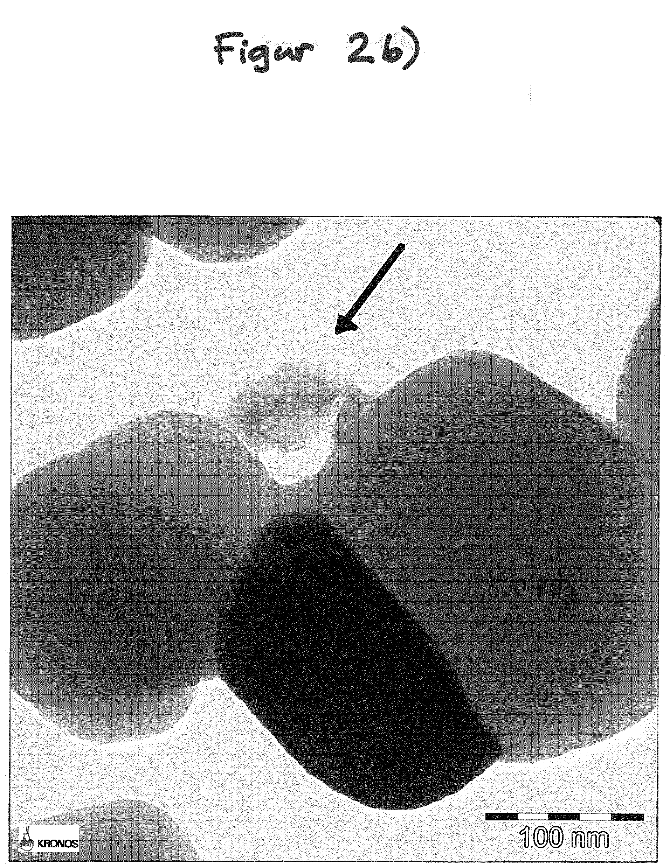

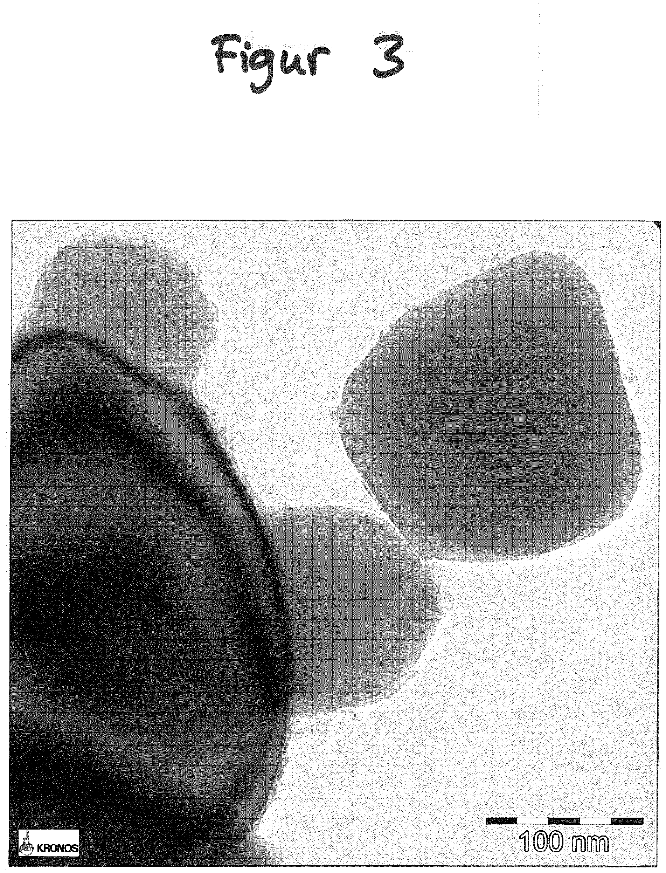

Erfindungsgemäß lagern sich die Agglomerate des Fällungsprodukts als diskrete Flocken auf die anorganischen Pigmentpartikel bzw. zwischen den anorganischen Pigmentpartikeln an (s. Figur 2). Im Gegensatz dazu bildet sich bei der konventionellen Oberflächenbehandlung von Partikeln durch in situ Fällung der anorganischen Materialien auf der Partikeloberfläche eine größtenteils durchgehende Schicht auf der Partikeloberfläche aus (s. Figur 3).

Die erfindungsgemäße Oberflächenbehandlung ermöglicht gegenüber der konventionellen Oberflächenbehandlung insbesondere eine verbesserte Abstandshaltung der einzelnen Pigmentpartikel und damit einen Effizienzgewinn bezüglich Opazität, Aufhellvermögen und Kosten. Desweiteren führt die erfindungsgemäße Oberflächenbehandlung zu Freiheitsgraden bei der Fällung der anorganischen Verbindungen, da die Pigmentpartikel den speziellen Fällungsbedingungen ausgesetzt werden müssen wie bei der konventionellen in situ Fällung.

In einer besonderen Ausführung des erfindungsgemäßen Verfahrens wird ein Titandioxidpigment zur Verwendung in Laminaten mit hoher Opazität und hoher Vergrauungsstabilität hergestellt. Hierbei wird auf der Titandioxid-Partikeloberfläche zunächst eine Schicht aus Aluminium-Phosphor-Verbindungen, gegebenenfalls im Gemenge mit Aluminiumoxidhydrat, abgeschieden. Die Zusammensetzung ist abhängig von den eingesetzten Mengen der Aluminium- und der Phosphorkomponente und der gegebenenfalls vorhandenen Menge an dotiertem $Al_2O_3$. Im Folgenden wird diese Schicht vereinfacht als Aluminiumoxidphosphat-Schicht bezeichnet. Die Aluminiumoxidphosphat-Schicht wird folgendermaßen hergestellt:

In eine wässrige Suspension von bevorzugt unbehandelten Titandioxidpartikeln mit einem pH-Wert von mindestens 8, bevorzugt mindestens 9, wird zunächst Phosphorsäure und eine alkalische Aluminiumverbindung und anschließend eine saure Aluminiumverbindung gegeben, wobei sich ein pH-Wert von 4,5 bis 7 einstellt und sich eine Aluminiumoxidphosphat-Schicht bildet.

Nachfolgend wird in einem Schritt eine wässrige Mischlösung aus mindestens zwei Komponenten mit einem pH-Wert von 4,5 bis 7 in einem separaten Behälter hergestellt. Die mindestens zwei Komponenten umfassen entweder eine alkalische Aluminiumverbindung (z.B. Natriumaluminat) und eine saure Komponente, beispielsweise eine Säure oder ein sauer reagierendes Salz (z.B. Aluminiumsulfat) oder sie umfassen alternativ eine saure Aluminiumverbindung (z.B. Aluminiumsulfat) und eine alkalische Komponente, beispielsweise eine Lauge oder ein alkalisch reagierendes Salz (z.B. Natriumaluminat).

In der Mischlösung fallen anorganische Aluminiumverbindungen insbesondere Aluminiumoxid in Form von Agglomeraten feinteiliger Primärpartikel aus. Die Agglomerate weisen bevorzugt eine lockere Struktur auf.

Anschließend wird die Mischlösung mit den gefällten Agglomeraten der Titandioxidsuspension zugegeben, wobei sich die gefällten Agglomerate als Flocken auf der Oberfläche der Titandioxidpartikel anlagern.

Abschließend erfolgt nach Bedarf eine pH-Wert-Einstellung der Titandioxidsuspension auf etwa 5 bis 7.

Die eingesetzte Menge Phosphorsäure beträgt bevorzugt 1,0 bis 5,0 Gew.-%, insbesondere 1,5 bis 3,5 Gew.-% und insbesondere bevorzugt 2,0 bis 3,0 Gew.-% gerechnet als $P_2O_5$ und bezogen auf $TiO_2$.

Die Gesamtmenge der zugegebenen Aluminiumverbindungen einschließlich der gefällten Agglomerate beträgt bevorzugt 3,0 bis 7,0 Gew.-%, insbesondere 4,0 bis 6,0 Gew.-% gerechnet als $Al_2O_3$ und bezogen auf $TiO_2$.

Das nachbehandelte $TiO_2$-Pigment wird durch den Fachmann bekannte Methoden der Filtration von der Suspension abgetrennt und der entstandene Filterkuchen gewaschen, um die löslichen Salze zu entfernen.

Dem gewaschenen Filterkuchen kann zur Verbesserung der Lichtechtheit des Pigments im Laminat vor oder während der anschließenden Trocknung eine nitrathaltige Verbindung, z.B. $KNO_3$, $NaNO_3$, $Al(NO_3)_3$, in einer Menge von 0,05 bis 0,5 Gew.-% gerechnet als $NO_3$ und bezogen auf Pigment zugemengt werden. Weiterhin kann dem Pigment in einer der Prozessstufen zur Verbesserung der Fließeigenschaften eine organische Verbindung zugefügt werden aus der Reihe derer, wie sie bei der Herstellung von $TiO_2$-Pigmenten üblicherweise verwendet werden und die dem Fachmann bekannt sind wie z.B. Polyalkohole (Trimethylolethan, Trimethylolpropan, Neopentylglykol). Alternativ zur Zugabe der nitrathaltigen Verbindungen vor oder während der Trocknung kann die Zugabe solcher Substanzen auch während der Mahlung erfolgen.

In einer alternativen Ausführung des Verfahrens wird das behandelte Pigment einer Wärmebehandlung bei 200 bis 400 °C, bevorzugt 200 bis 300 °C für etwa 60 bis 180 Minuten unterzogen.

Ebenfalls erfasst von der vorliegenden Erfindung ist das oberflächenbehandelte Titandioxidpigmentpartikel erhältlich nach dem beanspruchten Verfahren.

Das nach dieser Variante des erfindungsgemäßen Verfahrens hergestellte Pigment zeigt gegenüber den Vergleichspigmenten eine verbesserte Opazität bei gleich guter Helligkeit und Vergrauungsstabilität und ist für den Einsatz in Dekorpapier bestens geeignet.

Schließlich ist die Verwendung des oberflächenbehandelten Titandioxidpigmentpartikels zur Farbgebung in Kunststoffen, Beschichtungen und Laminaten ebenfalls beansprucht.

Beispiele

Im Folgenden ist die Erfindung beispielhaft beschrieben, ohne dass damit eine Einschränkung der Erfindung verbunden ist.

Beispiel 1

250 ml einer nassvermahlenen $TiO_2$-Pigmentpartikel-Suspension, die eine $TiO_2$-Konzentration von 400 g/l aufwies, wurde mit $H_2SO_4$ auf einen pH-Wert von 3 eingestellt. Anschließend wurde 2g $Al_2O_3$ in Form einer Aluminiumsulfatlösung zugegeben, wobei sich ein pH-Wert von unter 3 einstellte.

Zur Herstellung der Fällungsprodukte aus wässriger Lösung wurde in 100 ml einer Natriumaluminatlösung, die mittels 5%iger NaOH auf eine Konzentration von 100 g/l $Al_2O_3$ eingestellt worden war, bei einer Temperatur von 60°C unter Rühren langsam 100 ml einer Wasserglaslösung (100 g/l $SiO_2$) zugegeben. Anschließend wurde der pH-Wert mittels HCl langsam auf 10 abgesenkt und 24 Stunden bei Raumtemperatur gerührt. Es bildete sich ein feiner Niederschlag.

Die Figuren 1a und 1b zeigen zwei Transmissionselektronenmikroskop-Aufnahmen (TEM) des Fällungsprodukts. Das Fällungsprodukt besteht aus agglomerierten überwiegend kristallinen Partikeln, die ausgeprägte Kristallflächen und Primärpartikelgrößen sowohl unter 100 nm als auch über 100 nm aufweisen. Figur 1a zeigt zusätzlich einen Einzelkristall mit einer Kantenlänge von ca. 300 nm.

Anschließend wurde 40 ml der Suspension mit den Fällungsprodukten unter Rühren in die $TiO_2$-Suspension gegeben. Der pH-Wert der $TiO_2$-Suspension wurde anschließend auf 6 bis 8 eingestellt und die $TiO_2$-Partikel abgetrennt, gewaschen und bei 105°C getrocknet.

Die Figuren 2a und 2b zeigen zwei TEM-Aufnahmen der behandelten $TiO_2$-Pigmentpartikel. Die Aufnahmen zeigen, dass die gefällten Agglomerate als diskrete Abstandshalter zwischen den $Tio_2$-Partikeln auftreten (siehe Pfeil).

Die spezifische Oberfläche (BET) der behandelten Pigmentpartikel betrug 9,2 $m^2$/g.

Vergleichsbeispiel 1

Zu 250 ml einer nassvermahlenen $TiO_2$-Pigmentpartikel-Suspension mit einer $TiO_2$-Konzentration von 400 g/l und einem pH-Wert von etwa 12 wurde bei 60°C gleichzeitig 20 ml Wasserglaslösung (100 g/l $SiO_2$) und 20 ml Aluminiumsulfatlösung (100g/l $Al_2O_3$) gegeben. Anschließend wurde 2 g $Al_2O_3$ in Form einer Aluminiumsulfatlösung zugegeben. Nachfolgend wurde der pH-Wert der Suspension auf 7 eingestellt, die $TiO_2$-Partikel abgetrennt, gewaschen und bei 105°C getrocknet.

Figur 3 zeigt eine TEM-Aufnahme der behandelten $TiO_2$-Pigmentpartikel. Die Aufnahme zeigt, dass die in situ gefällten Oxide als fast durchgehende Schicht auf der Oberfläche der $TiO_2$-Partikel vorhanden sind.

Die spezifische Oberfläche (BET) der behandelten Pigmentpartikel betrug 15,3 $m^2$/g.

Beispiel 2

Einer nassvermahlenen $TiO_2$-Pigmentpartikelsuspension aus dem Chloridprozess mit einer $TiO_2$-Konzentration von 450 g/l, einer Aluminiumdotierung der $TiO_2$-Partikel entsprechend 1,2 Gew.-% $Al_2O_3$ und mit einem pH-Wert von 10 wurde 2,5 Gew.-% $P_2O_5$ in Form von 75%iger $H_3PO_4$ zugefügt. Dabei stellte sich ein pH-Wert von etwa 2 ein. Anschließend wurde 2,0 Gew.-% $Al_2O_3$ als Natriumaluminat zugefügt. Dabei stellte sich ein pH-Wert von etwa 10 ein. Danach wurde die Suspension im nächsten Schritt durch Zugabe von Aluminiumsulfat (entsprechend 1,1 bis 1,3 Gew.-% $Al_2O_3$) auf einen pH-Wert von 5 eingestellt.

Anschließend wurde eine wässrige Mischlösung aus den Komponenten Aluminiumsulfat und Natriumaluminat mit einem pH-Wert von 5 hergestellt, in der sich ein Fällungsprodukt aus agglomerierten Primärpartikeln bildete. Die Mischlösung mit dem Fällungsprodukt wurde der $TiO_2$-Suspension in einer Menge zugegeben, die einer Zugabemenge von 1,2 Gew.-% $Al_2O_3$ bezogen auf $TiO_2$ entspricht.

Anschließend wurde die Suspension mit Hilfe einer alkalischen Natriumaluminat-Lösung auf einen pH-Wert von 6 eingestellt.

Die nachbehandelte $TiO_2$-Suspension wurde filtriert und durch Waschen von den wasserlöslichen Salzen befreit. Die gewaschene Filterpaste wurde nach Zugabe von etwa 0,18 Gew.-% $NO_3$ als $NaNO_3$ in einem Sprühtrockner getrocknet und anschließend auf einer Strahlmühle vermahlen.

Das hergestellte Pigment wies folgende Zusammensetzung auf, jeweils angeben als Oxid: 2,2 Gew.-% $P_2O_5$ und 5,1 Gew.-% $Al_2O_3$ jeweils bezogen auf den $TiO_2$-Grundkörper und 0,17 Gew.-% $NO_3$.

Vergleichsbeispiel 2

Einer nassvermahlenen $TiO_2$-Pigmentpartikelsuspension aus dem Chloridprozess mit einer $TiO_2$-Konzentration von 450 g/l, einer Aluminiumdotierung der $TiO_2$-Partikel entsprechend 1,2 Gew.-% $Al_2O_3$ und mit einem pH-Wert von 10 wurde 2,5 Gew.-% $P_2O_5$ in Form von 75%iger $H_3PO_4$ zugefügt. Dabei stellte sich ein pH-Wert von etwa 2 ein. Anschließend wurde 2,0 Gew.-% $Al_2O_3$ als Natriumaluminat zugefügt. Dabei stellte sich ein pH-Wert von etwa 10 ein. Danach wurde die Suspension im nächsten Schritt durch Zugabe von Aluminiumsulfat (entsprechend 1,1 bis 1,3 Gew.-% $Al_2O_3$) auf einen pH-Wert von 5 eingestellt.

Es wurde anschließend 1,2 Gew.-% $Al_2O_3$ in Form einer parallelen Zugabe von Aluminiumsulfat- und Natriumaluminat-Lösung zugemischt, so dass der pH-Wert bei 5 gehalten wurde (fixed-pH Methode). Anschließend wurde die Suspension mit Hilfe einer alkalischen Natriumaluminat-Lösung auf einen pH-Wert von 6 eingestellt.

Die nachbehandelte $TiO_2$-Suspension wurde filtriert und durch Waschen von den wasserlöslichen Salzen befreit. Die gewaschene Filterpaste wurde nach Zugabe von etwa 0,18 Gew.-% $NO_3$ als $NaNO_3$ in einem Sprühtrockner getrocknet und anschließend auf einer Strahlmühle vermahlen.

Das hergestellte Pigment wies folgende Zusammensetzung auf, jeweils angeben als Oxid: 2,3 Gew.-% $P_2O_5$ und 5,5 Gew.-% $Al_2O_3$ jeweils bezogen auf den $TiO_2$-Grundkörper und 0,18 Gew.-% $NO_3$.

Testmethoden und Testergebnisse

Laminatherstellung (Labormaßstab)

Die gemäß Beispiel 2 und Vergleichsbeispiel 2 hergestellten Titandioxid-Pigmente wurden mit Zellstoff zu Dekorpapier verarbeitet und anschließend hinsichtlich ihrer optischen Eigenschaften und Lichtechtheit in verpressten Laminaten untersucht. Dazu wurde das zu prüfende Titandioxid-Pigment in Zellstoff eingearbeitet und Blätter mit einen Flächenmaß von etwa 80 g/m$^2$ und einem $TiO_2$-Massenanteil von etwa 30 g/m$^2$ hergestellt.
Für die Beurteilung der optischen Eigenschaften der Dekorpapiere und damit der Qualität des Titandioxidpigments ist es von Bedeutung, dass Dekorpapiere gleichen Aschegehalts verglichen werden. Hierfür ist es notwendig, dass die für die Blattbildung eingesetzte Menge Titandioxidpigment entsprechend der Retention an den gewünschten $TiO_2$-Massenanteil im Papier, hier 30± 1 g/m$^2$, bzw. das gewünschte Flächengewicht, hier 80± 1 g/m$^2$, angepasst wird. Für die Bildung eines Blattes wurden in diesen Versuchen 1,65 g Zellstoff (ofentrocken) zugrunde gelegt. Die Vorgehensweise und die eingesetzten Hilfsstoffe sind dem Fachmann bekannt.
Der Titandioxid-Gehalt (Asche in [%]) eines Blattes wurde anschließend bestimmt. Zur Bestimmung des Titandioxid-Gehalts wurde eine definierte Gewichtsmenge des hergestellten Papiers mit einem Schnellverascher bei 900 °C verascht. Über die Auswaage des Rückstands ist der Massenanteil an $TiO_2$ (Asche in [%]) zu berechnen. Zur Berechnung des Aschegehalts wurde folgende Formel zugrunde gelegt:

$$\text{Aschegehalt [g/m²]} = (\text{Asche [\%]} \times \text{Flächengewicht [g/m²]}) / 100 \text{ [\%]}.$$

Die weitere Verarbeitung des Papiers umfasste die Imprägnierung und Verpressung zu Laminaten. Das zu beharzende Blatt wurde in eine Melaminharzlösung vollständig eingetaucht, danach zwischen 2 Rakel gezogen, um einen bestimmten Harzauftrag zu gewährleisten, und anschließend im Umlufttrockenschrank bei 130 °C vorkondensiert. Der Harzauftrag betrug 110 bis 140 % des Blattgewichts. Das Blatt hatte eine Restfeuchte von 5,7 bis 6,2 Gew.-%. Die kondensierten Blätter wurden mit Phenolharz getränkten Kernpapieren und weißem bzw. schwarzem Underlay-Papier zu Presspaketen zusammengelegt.
Für die Messung der optischen Eigenschaften wurden die Presspakete folgendermaßen aufgebaut: Dekorpapier, weißes bzw. schwarzes Underlay-Papier, 6 Blätter Kernpapier, weißes bzw. schwarzes Underlay-Papier, Dekorpapier.
Für die Bestimmung der Vergrauungsstabilität wurden die Presspakete folgendermaßen aufgebaut: Dekorpapier, 5 Blätter Kernpapier, weißes Underlay-Papier.
Das Pressen der Pakete erfolgt mit Hilfe einer Wickert Laminat-Presse Typ 2742 bei einer Temperatur von 140 °C und einem Druck von 90 bar für eine Presszeit von 300 Sekunden.

Testung

Die Messung der optischen Eigenschaften und der Vergrauungsstabilität der Laminate erfolgte mit handelsüblichen Geräten (Spektralphotometer, Xenotestgerät).
Zur Beurteilung der optischen Eigenschaften von Schichtpress-Stoffen werden die Farbwerte (CIELAB L*, -a*, -b*) nach DIN 6174 mit Hilfe des ELREPHO® 3300-Farbmessgeräts über weißem bzw. über schwarzem Underlay-Papier bestimmt.
Als Maß für die Helligkeit wurde der CIELAB Farbwert L* über weißem Underlay-Papier (L*$_{weiß}$) verwendet.
Die Opazität ist ein Maß für die Lichtdurchlässigkeit oder Transmission des Papiers. Als Maß für die Opazität der Laminate wurden folgende Größen gewählt: CIELAB L*$_{schwarz}$, die Helligkeit der Laminate gemessen über schwarzem Underlay-Papier und der Opazitätswert L [%] = $Y_{schwarz}/Y_{weiß}$ x 100, ermittelt aus dem Y-Wert gemessen über schwarzem Unterlay-Papier ($Y_{schwarz}$) und dem Y-Wert über weißem Underlay-Papier ($Y_{weiß}$). Beide Werte, CIELAB L*$_{schwarz}$ und L [%], werden auf einen Aschegehalt von 30,0 g/m$^2$ normiert. Zur Beurteilung der Vergrauungsstabilität (Lichtechtheit) der Titandioxid-Pigmente bzw. der Titandioxid-Pigmentmischungen werden die entsprechenden Laminatmuster in einem XENOTEST® Alpha belichtet. Es wurden die Farbwerte CIELAB L*, a* und b* nach DIN 6174 vor und nach einer Dauer von 96 Stunden Belichtung im XENOTEST® Alpha gemessen. Die Lichtquelle ist eine Xenon-Bogen-Lampe mit einer UV-Strahlungsintensität von 70 W/m$^2$. Die Temperatur im Probenraum des Gerätes liegt bei 45°C, die relative Feuchte bei 30 %. Die Proben werden im "Wendelauf" belichtet. Als Maß für die Vergrauungsstabilität wurden sowohl $\Delta L* = L*_{vorher} - L*_{nachher}$ als auch $\Delta E = ((\Delta L*)^2 + (\Delta a*)^2 + (\Delta b*)^2)^{1/2}$ angegeben.

Testergebnisse

Die Tabelle zeigt die Testergebnisse für Laminat, das mit dem erfindungsgemäßen Pigment (Beispiel 2) bzw. mit einem Vergleichspigment (Vergleichsbeispiel 2) hergestellt wurde. Es zeigt sich, dass das mit dem erfindungsgemäßen Pigment hergestellte Laminat eine höhere Opazität aufweist bei gleichen Helligkeits- und Vergrauungsstabilitätswerten im Vergleich zu einem Laminat, das ein nach dem Stand der Technik hergestelltes Pigment enthält.

| | Aschegehalt | Opazität | | CIELAB | Vergrauungsstabilität | |
|---|---|---|---|---|---|---|
| | [g/m$^3$] | L*$_{schwarz}$ | L [%] | L*$_{weiß}$ | $\Delta$L* | $\Delta$E |
| Beispiel 2 | 30,0 | 90,4 | 90,8 | 93,6 | -0,56 | 0,56 |
| Vergleichsbeispiel 2 | 29,9 | 90,2 | 90,4 | 93,6 | -0,56 | 0,57 |

Tabelle

Fazit

Das erfindungsgemäße Verfahren führt zu einem Pigment mit deutlich unterschiedlichen Oberflächeneigenschaften gegenüber einem konventionell nachbehandelten Pigment, wie sich aus dem Vergleich der Figuren 2 und 3 und den entsprechenden spezifischen Oberflächenwerten (BET) ergibt. Die erfindungsgemäße Oberflächenbehandlung ermöglicht gegenüber der konventionellen Oberflächenbehandlung insbesondere eine verbesserte Abstandshaltung der einzelnen Pigmentpartikel und damit einen Effizienzgewinn bezüglich Opazität, Aufhellvermögen und Kosten.

Desweiteren führt die erfindungsgemäße Oberflächenbehandlung zu Freiheitsgraden bei der Fällung der anorganischen Verbindungen, da die Pigmentpartikel nicht den speziellen Fällungsbedingungen ausgesetzt werden müssen wie bei der konventionellen in situ Fällung.

**Patentansprüche**

**1.** Verfahren zur Oberflächenbehandlung von Titandioxidpigmentpartikeln **gekennzeichnet durch** folgende Schritte:

a) Bereitstellen einer wässrigen Suspension von Titandioxidpigmentpartikeln,
b) Fällung von anorganischen Verbindungen aus wässriger Lösung durch Mischen von mindestens zwei Komponenten in wässriger Lösung und geeignete Steuerung von pH-Wert und/oder Temperatur in einem separaten Behälter und Erzeugung einer Suspension eines Fällungsprodukts, wobei das Fällungsprodukt aus Agglomeraten feinteiliger Primärpartikel und/oder aus Einzelkristallen der Oxide und Hydroxiden von Silicium, Aluminium, Zirkon oder Titan oder Mischungen davon besteht,
c) Zugabe der Suspension des Fällungsprodukts zu der wässrigen Suspension von Titandioxidpigmentpartikeln.

**2.** Verfahren nach Anspruch 1 **dadurch gekennzeichnet, dass**
die gefällten feinteiligen Primärpartikel überwiegend kristallin sind.

**3.** Verfahren nach einem oder mehreren der Ansprüche 1 oder 2 **dadurch gekennzeichnet, dass**
die Titandioxidpigmentpartikel zuvor bereits oberflächenbehandelt worden sind.

**4.** Verfahren nach einem oder mehreren der Ansprüche 1 bis 3 **gekennzeichnet durch** folgende Schritte:

a) Bereitstellen einer wässrigen Suspension von Titandioxidpigmentpartikeln,
b) Fällung von Aluminiumoxid aus wässriger Lösung durch Mischung einer alkalischen Aluminiumverbindung mit einer sauren Komponente oder Mischung einer sauren Aluminiumverbindung mit einer alkalischen Komponente bei einem pH-Wert von 4,5 bis 7 in einem separaten Behälter und Erzeugung einer wässrigen Suspension von gefälltem Aluminiumoxid,
c) Zugabe der Suspension des gefällten Aluminiumoxids zu der wässrigen Suspension der Titandioxidpigmentpartikel.

**5.** Verfahren nach einem oder mehreren der Ansprüche 1 bis 3 **gekennzeichnet durch** folgende Schritte:

a) Bereitstellen einer wässrigen Suspension von Titandioxidpigmentpartikeln,

b) Fällung von Alumosilikat aus wässriger Lösung durch Mischung einer alkalischen Silikatlösung mit einer alkalischen oder sauren Aluminiumverbindung und Zugabe einer sauren oder alkalischen Komponente, so dass sich ein pH-Wert von maximal 10 einstellt, in einem separaten Behälter und Erzeugung einer wässrigen Suspension von gefälltem Alumosilikat,

c) Zugabe der Suspension des gefällten Alumosilikats zu der wässrigen Suspension der Titandioxidpigmentpartikeln.

**6.** Verfahren nach einem oder mehreren der Ansprüche 1 bis 3 **gekennzeichnet durch** folgende Schritte:

a) Bereitstellen einer wässrigen Suspension von unbehandelten Titandioxidpartikeln mit einem pH-Wert von mindestens 8, bevorzugt mindestens 9,

anschließend zunächst Zugabe von Phosphorsäure und einer alkalischen Aluminiumverbindung und anschließend Zugabe einer sauren Aluminiumverbindung, wobei sich ein pH-Wert von 4,5 bis 7 einstellt,

b) Fällung von anorganischen Aluminiumverbindungen aus einer wässrigen Lösung mit einem pH-Wert von 4,5 bis 7 in einem separaten Behälter, wobei die Lösung hergestellt wurde aus mindestens einer alkalischen Aluminiumverbindung und einer sauren Komponente bzw. aus mindestens einer sauren Aluminiumverbindung und einer alkalischen Komponente und Erzeugung einer wässrigen Suspension von gefällten Aluminiumverbindungen, wobei das Fällungsprodukt aus Agglomeraten feinteiliger Primärpartikel und/oder aus Einzelkristallen besteht,

c) Zugabe der Suspension der gefällten Aluminiumverbindungen zu der wässrigen Suspension der Titandioxidpigmentpartikel.

**7.** Verfahren nach einem oder mehreren der Ansprüche 1 bis 6 **dadurch gekennzeichnet, dass** die Titandioxidpigmentpartikel nachfolgend einer oder mehrerer weiterer Oberflächenbehandlungen unterzogen werden.

**8.** Oberflächenbehandeltes Titandioxidpigmentpartikel erhältlich nach einem oder mehreren der Ansprüche 1 bis 7.

**9.** Verwendung des oberflächenbehandelten Titandioxidpigmentpartikels nach Anspruch 8 zur Farbgebung in Kunststoffen, Beschichtungen oder Laminaten.

**Claims**

**1.** A method for the surface treatment of titanium dioxide pigment particles, **characterized by** the following steps:

a) Providing an aqueous suspension of titanium dioxide pigment particles,

b) Precipitating one or more inorganic compounds from an aqueous solution by mixing of at least two components in aqueous solution and appropriate control of pH value and/or temperature in a separate vessel to form a suspension of a precipitation product, in which the precipitation product consists of agglomerates of fine primary particles and/or of single crystals of oxides and hydroxides of silicon, aluminum, zirconium or titanium, or mixtures thereof,

c) Adding said suspension of the precipitation product to the aqueous suspension of titanium dioxide pigment particles.

**2.** Method according to claim 1, **characterized in that** the precipitated, fine primary particles are predominantly crystalline.

**3.** Method according to claim 1 or 2, **characterized in that** the inorganic pigment particles have been surface-treated previously.

**4.** Method according to one or more of claims 1 to 3, **characterized by** the following steps:

a) Providing an aqueous suspension of titanium dioxide pigment particles,

b) Precipitating aluminum oxide from aqueous solution by mixing an alkaline aluminum compound with an acidic compound or mixing an acidic aluminum compound with an alkaline compound at a pH value of between 4.5 to 7 in a separate vessel to form a suspension of a precipitated aluminum oxide,

c) Adding said suspension of the precipitated aluminum oxide to the aqueous suspension of titanium dioxide pigment particles.

5. Method according to one or more of claims 1 to 3, **characterized by** the following steps:

   a) Providing an aqueous suspension of titanium dioxide pigment particles,
   b) Precipitating aluminosilicate from aqueous solution by mixing an alkaline silicate solution with an alkaline or acidic aluminum compound and addition of an acidic or alkaline compound such that a pH value of at most 10 is achieved in a separate vessel and obtaining an aqueous suspension of precipitated aluminosilicate,
   c) Adding said suspension of the precipitated aluminosilicate to the aqueous suspension of titanium dioxide pigment particles.

6. Method according to one or more of claims 1 to 3, **characterized by** the following steps:

   a) Providing an aqueous suspension of titanium dioxide pigment particles, the suspension has pH value of at least 8, preferably of at least 9, subsequently adding phosphoric acid and an alkaline aluminum compound, and subsequently adding an acidic aluminum compound such that the pH is adjusted to a pH value of 4.5 to 7,
   b) Precipitation of inorganic aluminum compounds from an aqueous solution with a pH value of from 4.5 to 7 in a separate vessel, in which the solution was prepared from at least one alkaline aluminum compound and an acidic component or from at least one acidic aluminum compound and an alkaline component and production of an aqueous suspension of precipitated aluminum compounds, wherein the precipitation product consists of agglomerates of finely divided primary particles and/or of single crystals,
   c) Adding said suspension of the precipitated aluminosilicate to the aqueous suspension of titanium dioxide pigment particles.

7. Method according to one or more of claims 1 to 6, **characterized in that** the titanium dioxide pigment particles are subsequently subjected to one or more further surface treatments.

8. Surface treated titanium dioxide pigment particle obtainable by the method according to one or more of claims 1 to 7.

9. Use of the surface treated titanium dioxide pigment particle according to claim 8 in plastics, coatings or laminates.


**Revendications**

1. Procédé de traitement de surface de particules de pigment de dioxyde de titane, **caractérisé par** les étapes suivantes :

   a) la fourniture d'une suspension aqueuse de particules de pigment de dioxyde de titane,
   b) la précipitation de composés inorganiques à partir d'une solution aqueuse en mélangeant au moins deux composants dans une solution aqueuse et la régulation adaptée de la valeur de pH et/ou de la température dans un contenant séparé et la production d'une suspension d'un produit de précipitation, dans lequel le produit de précipitation est constitué d'agglomérats de particules primaires à fines particules et/ou de monocristaux des oxydes et hydroxydes de silicium, d'aluminium, de zirconium ou de titane ou de mélanges de ceux-ci,
   c) l'ajout de la suspension du produit de précipitation à la suspension aqueuse de particules de pigment de dioxyde de titane.

2. Procédé selon la revendication 1, **caractérisé en ce que** les particules primaires à fines particules précipitées sont majoritairement cristallines.

3. Procédé selon l'une quelconque ou plusieurs des revendications 1 ou 2, **caractérisé en ce que** les particules de pigment de dioxyde de titane ont été préalablement traitées en surface.

4. Procédé selon l'une quelconque ou plusieurs des revendications 1 à 3, **caractérisé par** les étapes suivantes :

   a) la fourniture d'une suspension aqueuse de particules de pigment de dioxyde de titane,
   b) la précipitation d'oxyde d'aluminium à partir de la solution aqueuse en mélangeant un composé d'aluminium alcalin à un composant acide ou en mélangeant un composé d'aluminium acide à un composant alcalin à une valeur de pH de 4,5 à 7 dans un contenant séparé et la production d'une suspension aqueuse d'oxyde d'aluminium précipité,
c) l'ajout de la suspension d'oxyde d'aluminium précipité à la suspension aqueuse des particules de pigment de dioxyde de titane.

**5.** Procédé selon l'une quelconque ou plusieurs des revendications 1 à 3, **caractérisé par** les étapes suivantes :

a) la fourniture d'une suspension aqueuse de particules de pigment de dioxyde de titane,
b) la précipitation d'aluminosilicate à partir d'une solution aqueuse en mélangeant une solution de silicate alcaline à un composé d'aluminium alcalin ou acide et l'ajout d'un composant acide ou alcalin, de sorte qu'une valeur de pH de 10 au maximum soit établie, dans un contenant séparé et la production d'une suspension aqueuse d'aluminosilicate précipité,
c) l'ajout de la suspension de l'aluminosilicate précipité à la suspension aqueuse des particules de pigment de dioxyde de titane.

**6.** Procédé selon l'une quelconque ou plusieurs des revendications 1 à 3, **caractérisé par** les étapes suivantes :

a) la fourniture d'une suspension aqueuse de particules de dioxyde de titane non traitées avec une valeur de pH d'au moins 8, de manière préférée d'au moins 9,
puis d'abord l'ajout d'acide phosphorique et d'un composé d'aluminium alcalin et
ensuite l'ajout d'un composé d'aluminium acide, dans lequel une valeur de pH de 4,5 à 7 est établie,
b) la précipitation de composés d'aluminium inorganiques à partir d'une solution aqueuse avec une valeur de pH de 4,5 à 7 dans un contenant séparé, dans lequel la solution a été fabriquée à partir d'au moins un composé d'aluminium alcalin et d'un composant acide ou à partir d'au moins un composé d'aluminium acide et d'un composant alcalin et la production d'une suspension aqueuse de composés d'aluminium précipités, dans lequel le produit de précipitation est constitué d'agglomérats de particules primaires à fines particules et/ou de monocristaux,
c) l'ajout de la suspension des composés d'aluminium précipités à la suspension aqueuse des particules de pigment de dioxyde de titane.

**7.** Procédé selon l'une quelconque ou plusieurs des revendications 1 à 6, **caractérisé en ce que** les particules de pigment de dioxyde de titane ont été soumises ensuite à un ou à plusieurs traitements de surface ultérieurs.

**8.** Particule de pigment de dioxyde de titane traitée en surface pouvant être obtenue selon l'une quelconque ou plusieurs des revendications 1 à 7.

**9.** Utilisation de la particule de pigment de dioxyde de titane traitée en surface selon la revendication 8 pour la coloration dans des matières plastiques, des revêtements ou des stratifiés.

Figur 1a)

Figur 2a)

Figur 1b)

Figur 2b)

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3591398 A
- US 4075031 A
- DE 10332650 A1
- DE 102011015856 A1
- WO 2002077107 A2
- EP 2111846 A1
- EP 1329483 A2
- WO 2013023018 A